# DEMANDE DE BREVET EUROPEEN

(11) **EP 4 212 329 A1**
(43) Date de publication de la demande: **19.07.2023**
(21) Numéro de dépôt: 22151414.4
(22) Date de dépôt: 13.01.2022
(51) Int. Cl.: B32B 3/08, B32B 5/02, B32B 5/08, B32B 5/26, B32B 7/02, B32B 15/02, B32B 15/20

(54) **COMPOSITION MULTICOUCHE POUR MASQUE RESPIRATOIRE DE PROTECTION**

(71) Demandeur: Airxôm, 69001 Lyon (FR)
(72) Inventeur: GASTON, Vincent, 69001 LYON (FR); NGUYEN, Trong Dai, 69120 VAULX-EN-VELIN (FR); LAMAA, Lina, 69120 VAULX-EN-VELIN (FR); PERUCHON, Laure, 69100 VILLEURBANNE (FR); BROCHIER, Cédric, 69007 LYON (FR)
(74) Mandataire: Germain Maureau

(57) **Abrégé**

Composition multicouche pour masque respiratoire de protection formée d'au moins :
- une couche textile lumineuse (1) comprenant des fibres optiques (10) à émission latérale tissées en chaîne et/ou en trame avec des fils de liage, l'une des deux extrémités libres des fibres optiques (10) est configurée pour être couplée à une source lumineuse générant un rayonnement lumineux dans le spectre de l'ultraviolet ; et
- une couche additionnelle (2a, 2b) en matériau tissé ou non-tissé .

Au moins l'une des couches de ladite composition, intègre des composés métalliques connus pour leurs propriétés antimicrobiens et/ou antibactériens.

## Description

### Domaine de l'invention

La présente invention concerne une composition multicouche pour masque respiratoire de protection capable de réduire la quantité de microorganismes vivants, tels que bactéries ou particules virales, présents dans l'air inspiré et/ou expiré au travers de ce masque.

### Etat antérieur de la technique

Les compositions adaptées pour la réalisation de masque facial de protection doivent répondre à des contraintes normatives en vigueur, incluant notamment la respirabilité ainsi que la capacité de filtration de particules d'origine chimique ou infectieuse de diamètres préétablis, à des débits d'air préétablis.

En particulier, pour répondre à ces contraintes de filtration, les masques sont généralement réalisés avec des compositions multicouches en matériau non-tissé comprenant un ou plusieurs media(s) filtrant(s) enserré(s) entre une couche interne et une couche externe. Plus le nombre de couches de média filtrant augmente, plus la filtration des microparticules est efficace. Cependant, l'empilement de couches augmente l'épaisseur et donc la rigidité du masque, ainsi que sa résistance respiratoire. C'est la raison pour laquelle le plus souvent les masques sont équipés d'une valve d'expiration qui améliore les performances de respirabilité. Toutefois cette solution présente l'inconvénient de relarger un air vicié et même potentiellement contaminant si le porteur est atteint d'une pathologie transmissible par voie aérienne.

En outre, ces compositions multicouches n'assurent principalement que la fonction de blocage et de filtrage des microparticules virales, de sorte que certaines particules filtrées peuvent rester sur le masque et s'accumuler à la surface du masque. Ces particules virales résiduelles peuvent représenter un risque de contamination pour le porteur lors d'une mauvaise manipulation du masque.

Une solution consiste à ajouter des agents biocides dans la composition des masques, qui nécessite cependant des procédés de traitement souvent très couteux, ainsi que la sélection d'un agent virucide répondant à la fois aux conditions d'efficacité, de rapidité et de risques toxicologiques. Par ailleurs, la durée de port de ces masques traités reste limitée.

Une autre solution consiste à intégrer dans le masque un système de désinfection par rayonnement ultraviolet. Une telle solution est par exemple proposée dans les documents KR10-1131825 et CN111513394 qui divulguent l'insertion entre les couches interne et externe, d'une couche de stérilisation à base de fibres optiques ainsi qu'une couche photocatalytique. Cependant, la fonction de désinfection via l'accumulation de ces couches est obtenue au détriment de la respirabilité du masque, ce qui explique la non-faisabilité de ces solutions à l'heure actuelle.

La présente invention propose donc une composition alternative pour la réalisation de masque respiratoire de protection permettant d'améliorer la fonction de désinfection par traitement lumineux, ainsi que sa respirabilité.

### Résumé de l'invention

Selon un premier aspect, l'invention a pour objet une composition multicouche pour masque respiratoire de protection formée d'au moins : - une couche textile lumineuse comprenant des fibres optiques à émission latérale tissées en chaîne et/ou en trame avec des fils de liage, l'une des deux extrémités libres des fibres optiques est configurée pour être couplée à une source lumineuse générant un rayonnement lumineux ayant une action négative sur au moins des microorganismes cibles ; et - une couche additionnelle en matériau tissé ou non-tissé.

Selon l'invention, au moins l'une des couches de ladite composition, intègre des composés métalliques connus pour leurs propriétés antimicrobiens et/ou antibactériens.

L'action négative sur les microorganismes correspond par exemple à toutes actions visant à limiter leur prolifération, parmi lesquelles l'inactivation (ou inhibition) de microorganismes cibles, la réduction de leur activité, ou encore la réduction du nombre de microorganismes présents sur la composition multicouche. En pratique, le rayonnement lumineux comprend de préférence au moins une longueur d'onde dans le spectre du visible ou de l'ultraviolet, par exemple dans la bande spectrale 100nm et 400nm. Le rayonnement lumineux peut ainsi être avantageusement un rayonnement ultraviolet (c'est-à-dire dans la bande spectrale 100nm-400nm) ou visible-proche ultraviolet (c'est-à-dire dans la bande spectrale 400nm-500nm).

Ainsi, la fonction d'auto-désinfection de la composition multicouche est renforcée grâce à la présence de composés métalliques dont les propriétés antimicrobiens et/ou antibactériens sont accrues par les rayonnements lumineux, notamment les rayonnements ultraviolets (UV), émis par les fibres optiques disposées à proximité. Par ailleurs, l'ajout de ces composés métalliques sur au moins l'une des couches de la composition améliore l'efficacité de la désinfection sans augmenter l'épaisseur, et donc la rigidité, de la composition. Par ailleurs, la présence du textile lumineux peut permettre l'usage de textile tissé ou tricoté pour les couches interne et/ou externe de manière à améliorer la respirabilité de la composition tout en assurant un niveau de protection suffisant. En effet, malgré le risque d'écartement des mailles des textiles tissés ou tricotés, la protection contre les microparticules virales ou microbiennes peut être assurée au moins par l'action des composés métalliques combinés aux rayonnements UV diffusés par les fibres optiques. Le rayonnement UV est par exemple de type UV-A, ou de longueur d'onde comprise entre 315nm et 400nm.

Les composés métalliques peuvent être sous la forme de fils métalliques ou de microparticules métalliques. En outre, le matériau métallique peut être choisi dans le groupe comprenant l'argent (Ag), le cuivre (Cu), l'or (Au), ou une combinaison de ces métaux.

Par exemple, les composés métalliques peuvent être intégrés à la couche textile lumineuse sous la forme de fils métalliques, qui peuvent être également tissés en chaîne et/ou en trame avec les fils de liage, qui peuvent être identiques ou distinctes de ceux tissés avec les fibres optiques. En pratique, le fil métallique utilisé peut être constitué d'un seul type de métal, par exemple sous la forme d'un fil de métal dit pur seul ou combiné avec un fil textile, ou constitué d'un mélange de métaux, par exemple à base de cuivre et d'argent, également seul ou combiné avec un fil textile.

En outre, pour accroître l'action du rayonnement lumineux, et notamment le rayonnement UV, sur les microparticules virales ou microbiennes, la couche textile lumineuse peut intégrer des particules photocatalytiques ayant un effet sur l'inactivation des microparticules virales ou microbiennes. Par exemple, les particules photocatalytiques sont formées dans un matériau choisi parmi le groupe comprenant le dioxyde de titane, l'oxyde de zinc, le dioxyde de zirconium et le sulfure de cadmium. Par exemple, le photocatalyseur est à base de dioxyde de titane (TiO₂).

La couche additionnelle peut faire office de couche externe et peut en outre être en textile tissé ou tricoté, et intégrer des composés métalliques sous la forme de fils métalliques tissés avec les fibres du textile tissé ou tricoté. La couche additionnelle peut également être en matériau non-tissé intégrant des microparticules métalliques. De préférence, la couche textile lumineuse est configurée de sorte que la surface de la couche externe en regard des fibres optiques reçoit tout ou partie des rayonnements UV émis par les fibres optiques.

La composition multicouche peut en outre comprendre une autre couche additionnelle qui peut également être en textile tissé ou tricoté et peut également intégrer des composés métalliques sous la forme de fils métalliques tissés ou tricoté avec les fibres du textile. Ladite autre couche additionnelle peut être en matériau non-tissé intégrant des microparticules métalliques. De préférence, la couche textile lumineuse est configurée de sorte que la surface de cette couche additionnelle en regard des fibres optiques reçoit tout ou partie des rayonnements UV émis par les fibres optiques.

Selon une variante, les deux couches additionnelles sont disposées en regard d'une même face de la couche textile lumineuse. Selon une autre variante, les deux couches additionnelles sont disposées de part et d'autre de la couche textile lumineuse.

Au moins l'une des deux couches additionnelles peut également intégrer du charbon actif.

Avantageusement, les différentes couches sont choisies de sorte que la composition multicouche présente une perte de charge inférieure ou égale à 300 Pa à un débit d'air de 95L/min en expiration.

A cet égard, et à titre d'exemple, la couche textile lumineuse est configurée pour présenter une perte de charge inférieure à 50Pa à un débit d'air de 95L/min en expiration.

Selon un second aspect, l'invention a également pour objet un masque respiratoire réalisé avec la composition multicouche décrite ci-avant. Avantageusement, les fibres optiques sont couplées à une source lumineuse générant un rayonnement lumineux dans l'un des spectres mentionné ci-avant, de préférence un rayonnement UV, par exemple de type UV-A.

### Brève description des figures

Les caractéristiques et avantages de l'invention ressortiront clairement de la description de modes de réalisations décris ci-après, donnés à titre indicatif et nullement limitatif, en référence aux dessins annexés.
[Fig.1] La figure 1 est une représentation schématique d'une composition multicouches selon un mode de réalisation de l'invention ;
[Fig.2] La figure 2 est une représentation schématique d'une composition multicouches selon un autre mode de réalisation de l'invention ;
[Fig.3] La figure 3 est une représentation schématique d'une composition multicouches selon un autre mode de réalisation de l'invention ;
[Fig.4] La figure 4 est une représentation schématique d'une composition multicouches selon un autre mode de réalisation de l'invention.

### Exposé détaillé de l'invention

L'invention concerne ainsi une composition multicouche pour la réalisation de masque respiratoire de protection, formée d'une couche textile lumineuse combinée à au moins une couche additionnelle intégrant des composés métalliques.

En particulier, la couche textile lumineuse est formée de fibres optiques à émission latérale tissées en chaîne et/ou en trame avec des fils de liage agencés en chaîne et/ou en trame, et l'une des extrémités libres des fibres optiques est configurée pour être couplée à une source lumineuse, par exemple une diode électroluminescente (LED) configurée pour générer un rayonnement lumineux dans un spectre lumineux permettant de limiter la prolifération des microorganismes cibles sur la surface de la composition multicouche. Il s'agit avantageusement de l'ultraviolet (UV), de préférence de type UV-A. Par exemple, la couche textile lumineuse peut être similaire à la nappe textile lumineuse décrite dans le brevet FR2910341B1 ou similaire à la nappe textile décrite dans la demande FR2000384A1, dans lesquelles l'émission latérale est obtenue soit via une modification du matériau de la gaine optique, soit via des altérations invasives présentes sur la surface extérieure des fibres optiques. Ainsi, la couche textile lumineuse peut également intégrer des composés métalliques connus pour leur propriété antimicrobienne et/ou antibactérienne, comme par exemple le cuivre ou l'argent. Les composés métalliques peuvent notamment être sous la forme de fils métalliques tissés avec les fils de liage. Pour augmenter l'effet antimicrobien, la couche textile lumineuse peut également intégrer des particules photocatalytiques telles que le dioxyde de titane (TiO₂) ayant une efficacité sur l'inactivation des bactéries. Ces particules photocatalytiques peuvent être rapportées sur l'un des composants de la nappe textile lumineuse, par exemple sur tout ou partie des fibres optiques ou sur tout ou partie des fils de liage. En outre, il est également possible de prévoir une couche protectrice à base de silice (SiO₂) sur les composants (fibres optiques et/ou fils de liage) recevant les particules photocatalytiques. Par ailleurs, la nappe textile formant la couche textile lumineuse peut être réalisée ou tissée pour émettre sur uniquement un de ses faces ou sur ses deux faces opposées.

La couche additionnelle intégrant des composés métalliques est positionnée en regard de l'une des faces de la nappe textile de la couche textile lumineuse, peut être matériau tricoté, tissé ou non-tissé, et peut ainsi faire office de couche externe, couche interne ou couche intermédiaire filtrante. Les composés métalliques sont également choisis parmi les matériaux connus pour leurs propriétés antimicrobiens et/ou antibactériens, tels que l'argent et le cuivre, et peuvent être sous la forme de microparticules ou de fils métalliques tissés. Par exemple, un fil métallique à base d'un seul type de métal ou d'une combinaison de métaux, sous la forme d'un fil métallique dit pur ou combiné avec un fil textile.

Ainsi, lors de l'utilisation, le rayonnement UV émis par les fibres optiques active les particules photocatalytiques et les fils métalliques, et offre ainsi un effet antibactérien/antiviral qui est supérieur à la simple combinaison des actions des UV seuls et du cuivre ou de l'argent seul sur les bactéries. En outre, tout ou partie des composés métalliques du ou des couches additionnelles enserrant la couche textile lumineuse reçoivent les rayonnements UV en excès, c'est-à-dire les photons en excès qui ne sont pas absorbés par les particules photocatalytiques, renforçant ainsi l'effet antibactérien de ces composés métalliques.

La composition multicouche de la présente invention comprend donc une couche textile lumineuse capable de détruire ou au moins de réduire significativement les particules infectieuses à proximité, et capable de renforcer l'action antibactérienne des composés métalliques présents dans les autres couches de la composition.

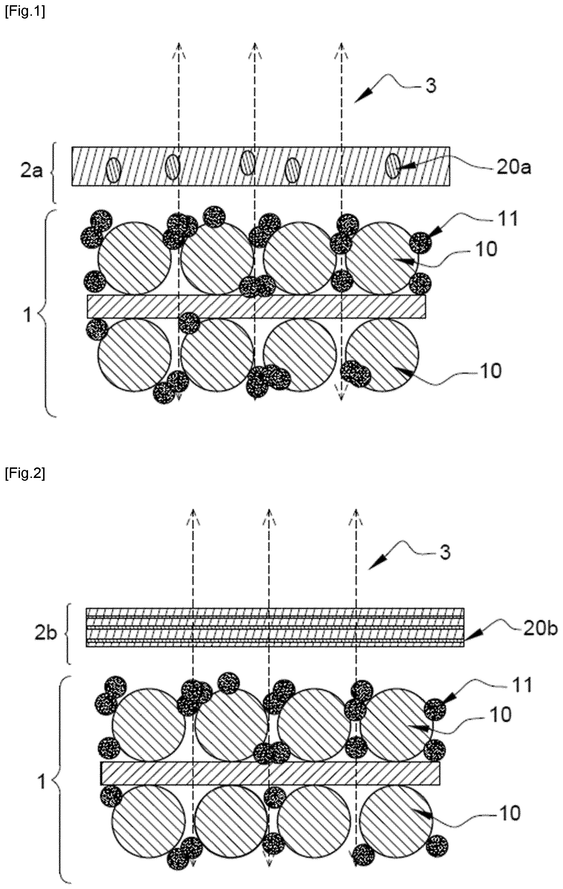

Les figures 1 à 4 donnent des exemples de combinaisons de couches. Sur ces figures, la couche textile lumineuse **1** comprend des fibres optiques **10** à émission latérale et peut être pourvue de fils métalliques (non-représentés) et/ou de particules photocatalytiques **11,** comme décrit ci-dessus.

Sur les figures 1 et 2, cette couche textile lumineuse **1** est combinée à une couche additionnelle **2a, 2b** intégrant des composés métalliques représentés sous la forme de microparticules **20a** sur la figure 1, et sous la forme de fils métalliques **20b** sur la figure 2.

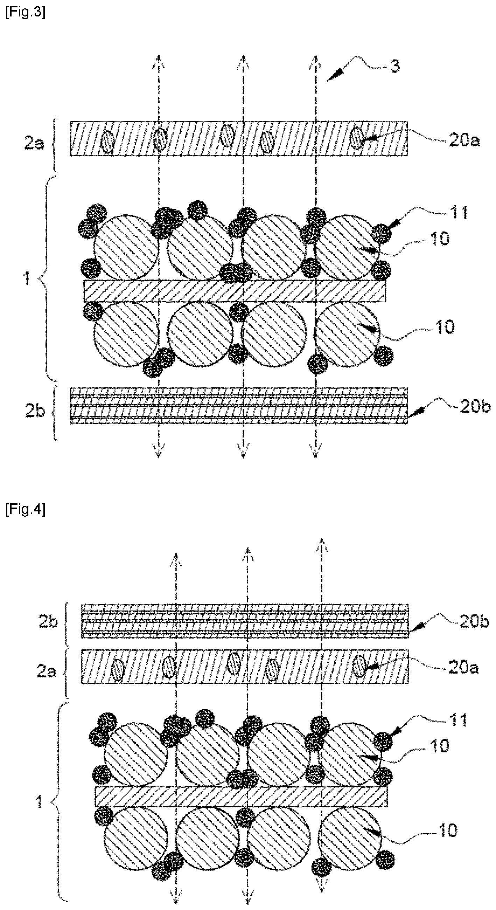

Sur les figures 3 et 4, cette couche textile lumineuse **1** est combinée avec deux couches additionnelles **2a, 2b.** Une première couche additionnelle **2a** intègre des microparticules métalliques **20a,** et une deuxième couche additionnelle **2b** intègre des fils métalliques **20b** tissés. Comme illustrée sur la figure 3, les deux couches additionnelles **2a, 2b** peuvent être disposées en regard d'une même face de la couche textile lumineuse. Selon une autre variante illustrée sur la figure 4, les deux couches additionnelles **2a, 2b** enserrent la couche textile lumineuse. Bien entendu, il est possible d'envisager une composition comprenant plus de trois couches.

En pratique, tout ou partie des rayonnements UV peuvent atteindre tout ou partie des microparticules métalliques des couches additionnelles pour renforcer et accroître de manière significative leurs effets sur les bactéries ou virus présent dans le flux d'air **3** traversant les couches de la composition et/ou sur les bactéries ou virus présents sur les surfaces de ces couches.

La perméabilité à l'air de la composition est assurée par une sélection adaptée des différentes couches. Par exemple, les différentes couches de la composition sont de préférence choisies pour assurer une perte de charge inférieure à 300Pa à un débit d'air de 95L/min en expiration. Concernant la couche textile lumineuse, le choix de l'armure et de la densité du fils de liage, des fils métalliques et des fibres optiques sont des paramètres qui peuvent être pris en compte pour garantir une bonne perméabilité à l'air de la composition multicouches en présence de toutes les autres couches filtrantes. A cet égard, et à titre d'exemple, la couche textile lumineuse peut être tissée pour présenter une perte de charge inférieure à 50Pa à un débit d'air de 95L/min en expiration. Par exemple, les fibres optiques de la couche textile lumineuse peuvent être tissées avec les fils de liage selon une armure de type satin. Le fil de liage utilisé peut être un filament PET (polyethylene terephthalate), par exemple de 76dtx.

A titre d'exemple non limitatif, la composition peut comporter les couches suivantes :
- une couche externe destinée à être en contact de l'air ambiant, en textile contenant des composés métalliques, par exemple un textile tissé ou tricoté contenant des fils d'argent. Cette couche peut par exemple être en tissu à base d'acétate et de fils d'argent, ou en tissu à base de fibre en polyester et de fils d'argent, et peut présenter une épaisseur inférieure ou égale à 0,5mm ;
- une première couche intermédiaire, en matériau non-tissé filtrant des particules de diamètre inférieure ou égal à 3µm, et intégrant des microparticules de cuivre. L'épaisseur de cette couche filtrante peut être inférieure ou égale à 3mm ;
- une couche textile lumineuse à base de fibres optiques à émission latérale intégrant des fils métalliques d'argent ou de cuivre et de particules photocatalytiques TiO₂, l'épaisseur de cette couche lumineuse peut être inférieure ou égale à 1,2mm ;
- une seconde couche intermédiaire, en matériau non-tissé filtrant des particules de diamètre inférieure ou égal à 3µm et intégrant du charbon actif. L'épaisseur de cette couche filtrante peut être également inférieure ou égale à 3mm ; et
- une éventuelle couche interne, en matériau adapté pour le confort du porteur, par exemple d'épaisseur inférieure ou égale à 0,5mm.

La couche interne peut également servir de couche de protection des rayonnements lumineux pour l'utilisateur, et peut donc être configurée ou choisie pour empêcher ou limiter les rayonnements UV d'atteindre l'utilisateur. En outre, l'intensité lumineuse émise par la couche textile lumineuse peut être choisie de manière à limiter la diffusion à une distance inférieure à l'épaisseur de la composition multicouche.

En termes de perméabilité à l'air, ces différentes couches peuvent être choisies pour présenter chacune les pertes de charge suivantes, données pour un débit d'air de 160L/min pour une surface de 100cm² :
- couche externe : entre 7 et 13 Pa ;
- première couche intermédiaire filtrante : 21 Pa
- couche textile lumineuse : 78 Pa
- une seconde couche intermédiaire filtrante : 170 Pa

Bien entendu, ces pertes de charges peuvent être modulées tout en veillant à assurer une perte de charge inférieure ou égale à 300 Pa à un débit d'air de 95L/min en expiration pour l'ensemble de la composition multicouche.

Ainsi, l'adjonction d'au moins une valve ou d'une soupape d'expiration est rendue optionnelle. Selon une variante, la composition multicouche peut donc intégrer une telle valve comprenant un ou plusieurs filtres en matériau présentant un pouvoir antibactérien / antiviral capable de filtrer et/ou d'inactiver des virus et des bactéries. Il s'agit par exemple d'une soupape d'expiration classique recouverte d'un tel filtre afin de limiter la propagation d'un air vicié vers l'extérieur. Une telle valve d'expiration placée derrière un filtre aux propriétés bactéricide et virucide configurée pour filtrer les bactéries et les virus à plus de 99% apporte ainsi une sécurité maximale au porteur du masque ainsi qu'à son entourage, tout en améliorant la respirabilité.

Par exemple, l'intensité lumineuse du rayonnement UV-A est de l'ordre de 400pW/CM² avant enduction du photocatalyseur.

La présente invention est ainsi une solution alternative pour une composition multicouche pour la réalisation de masque respiratoire de protection, intégrant outre les fonctions de filtration des microparticules chimiques ou infectieuses, une fonction améliorée de désinfection par traitement lumineux de l'air passant au travers du masque ainsi que des surfaces du masque, tout en offrant une perméabilité à l'air acceptable.

## Revendications

1. Composition multicouche pour masque respiratoire de protection formée d'au moins :
- une couche textile lumineuse (1) comprenant des fibres optiques (10) à émission latérale tissées en chaîne et/ou en trame avec des fils de liage, l'une des deux extrémités libres des fibres optiques (10) est configurée pour être couplée à une source lumineuse générant un rayonnement lumineux ayant une action négative sur au moins des microorganismes cibles ; et
- une couche additionnelle (2a, 2b) en matériau tissé ou non-tissé ;
**caractérisé en ce qu'**au moins l'une des couches de ladite composition, intègre des composés métalliques connus pour leurs propriétés antimicrobiens et/ou antibactériens.

2. Composition multicouche selon la revendication 1, dans laquelle les composés métalliques sont sous la forme de fils métalliques (20b) ou de microparticules métalliques (20a), et le matériau métallique est choisi dans le groupe comprenant l'argent, le cuivre, l'or, ou une combinaison de ces métaux.

3. Composition multicouche selon la revendication 1 ou 2, dans laquelle les composés métalliques sont intégrés à la couche textile lumineuse (1) sous la forme de fils métalliques.

4. Composition multicouche selon l'une des revendications 1 à 3, dans laquelle la couche textile lumineuse (1) intègre des particules photocatalytiques (11) formées dans un matériau choisi parmi le groupe comprenant le dioxyde de titane, l'oxyde de zinc, le dioxyde de zirconium et le sulfure de cadmium.

5. Composition multicouche selon l'une des revendications 1 à 4, dans laquelle la couche additionnelle (2b) est en textile tissé ou tricoté, et intègre des composés métalliques sous la forme de fils métalliques (20b) tissés ou tricotés avec les fibres du textile.

6. Composition multicouche selon l'une des revendications 1 à 4, dans laquelle la couche additionnelle (2a) est en matériau non-tissé intégrant des microparticules métalliques (20a).

7. Composition multicouche selon l'une des revendications 1 à 6, comprenant en outre une autre couche additionnelle en textile tissé ou tricoté, et intégrant des composés métalliques sous la forme de fils métalliques (20b) tissés avec les fibres du textile tissé ou tricoté.

8. Composition multicouche selon l'une des revendications 1 à 6, comprenant en outre une autre couche additionnelle en matériau non-tissé intégrant des microparticules métalliques (20a).

9. Composition multicouche selon l'une des revendications 7 à 8, dans laquelle la couche additionnelle (2a) et ladite autre couche additionnelle (2b) sont disposées en regard d'une même face de la couche textile lumineuse (1).

10. Composition multicouche selon l'une des revendications 7 à 8, dans laquelle la couche additionnelle (2a) et ladite autre couche additionnelle (2b) sont disposées de part et d'autre de la couche textile lumineuse (1).

11. Composition multicouche selon l'une des revendications 7 à 10, dans laquelle la couche additionnelle (2a) et/ou ladite autre couche additionnelle (2b) intègre du charbon actif.

12. Composition multicouche selon l'une des revendications 1 à 11, présentant une perte de charge inférieure à 300 Pa à un débit d'air de 160L/min en expiration.

13. Composition multicouche selon l'une des revendications 1 à 12, dans laquelle la couche textile lumineuse (1) présente une perte de charge inférieure à 80Pa à un débit d'air de 160L/min en expiration.

14. Masque respiratoire réalisé avec la composition multicouche selon l'une des revendications 1 à 13.

15. Masque respiratoire selon la revendication 14, dans lequel les fibres optiques (10) sont couplées à une source lumineuse générant un rayonnement ultraviolet.
